# EUROPÄISCHE PATENTANMELDUNG

(11) **EP 1 607 214 A2**
(43) Veröffentlichungstag der Anmeldung: **21.12.2005**
(21) Anmeldenummer: 05001285.5
(22) Anmeldetag: 22.01.2005
(51) Int. Cl.: B32B 15/02, E04D 1/36, B29C 53/22

(54) **Verfahren zur Herstellung eines Abdeckmaterials für Bauzwecke, Vorrichtung dafür und Abdeckmaterial**

(30) Priorität: 15.06.2004 DE 202004009468 U; 27.09.2004 DE 102004046839
(71) Anmelder: Fleck, Oskar, D-45711 Datteln (DE)
(72) Erfinder: Fleck, Oskar, D-45711 Datteln (DE)
(74) Vertreter: Hoffmeister, Helmut

(57) **Zusammenfassung**

Die Erfindung betrifft ein Verfahren zur Herstellung eines flächigen Abdeckmaterials (200) für Bauzwecke, umfassend folgende Verfahrensschritte:
(a) die zur Klebeschicht (1) bestimmte Formmasse wird als Bahn auf eine Förderstrecke extrudiert,
(b) die Deckschicht (2) wird mit der Bahn in Kontakt gebracht,
die Deckschicht (2) und die mit ihr verbundene Bahn werden durch rhythmische Hubbewegung einer Werkzeugkante (21) zur Folienoberfläche, die in die Oberfläche eintaucht, mit einer kreppartigen Oberflächenformation versehen, wobei die Werkzeugkante (21) den Vorschub der Bahn in Förderrichtung besorgt oder zumindest unterstützt. Eine Vorrichtung (100) zur Durchführung des Verfahrens besteht aus:
- einem mit einer Breitschlitzdüse (23) ausgestatteten Extruder (30),
- einem Schieber (20) mit der Werkzeugkante (21),
- einer Vorratsrolle (12), von der die Bahn zur Bildung der Deckschicht (2) unter die Werkzeugkante (21) des Schiebers (20) zuführbar ist,
- wenigstens einer Vorratsrolle (13), von der ein von dem fertigen Abdeckmaterial abziehbarer Schutzfolienstreifen (15.1...15.5) unter die bahnförmige Klebeschicht (1) zuführbar ist.

## Beschreibung

Die Erfindung betrifft ein Verfahren zur Herstellung eines flächigen Abdeckmaterials für Bauzwecke, das folgende Schichtung umfasst:
- eine Klebeschicht aus einer plastisch verformbaren, klebrigen Formmasse,
- auf einer Seite der Klebeschicht wenigstens eine Deckschicht,
wobei Formmasse und Deckschicht im wesentlichen durchgehend miteinander verbunden und dreidimensional verformt sind. Ferner betrifft die Erfindung eine Vorrichtung zur Durchführung des Verfahrens sowie ein gemäß dem Verfahren hergestelltes Abdeckmaterial.

Aus der DE 100 46 965 A1 ist ein Verfahren zur Herstellung eines Dichtstreifens zum Abdichten von Flächenübergängen ab Dächern bekannt, bei dem die Prägestruktur der Deckschicht, im weiteren Haut genannt, durch Stauchen, jedoch mit Hilfe eines vorgeschalteten Walzenpaares erzielt werden kann. Gestaucht wird in einem Arbeitsgang sowohl die obere Haut als auch eine zweite, zwischen der Haut und dem Butylkautschuk liegende, zugfeste Folie. Die Prägestruktur weist zahlreiche kuppelförmige Noppen auf. Ein Mittelbereich des Dichtstreifens ist klebemittelfrei, d. h. ist nicht vom Butylkautschuk unterlegt.

Die Aufgabe der Erfindung ist, ein Verfahren zur Herstellung von Abdeckmaterial für Bauzwecke anzugeben, bei dem der Stauchprozess ohne teuere Prägewalzen auskommt. Eine weitere Aufgabe der Erfindung ist, eine Vorrichtung zur Durchführung des Verfahrens zu konzipieren sowie ein Abdeckmaterial von verbesserten Gebrauchseigenschaften, insbesondere der Dehnbarkeit der an der Klebeschicht fixierten Deckschicht anzugeben.

Diese Aufgabe wird durch ein Verfahren mit folgenden Verfahrensschritten gelöst:
(a) die zur Klebeschicht bestimmte Formmasse wird als Bahn auf eine Förderstrecke extrudiert,
(b) die Folienschicht wird mit der Bahn in Kontakt gebracht,
(c) die Folienschicht und die mit ihr verbundene Bahn werden durch rhythmische, relative Hubbewegung einer Werkzeugkante zur Folienoberfläche, die in die Oberfläche eintaucht, mit einer kreppartigen Oberflächenformation versehen, wobei die Werkzeugkante den Vorschub der Bahn in Förderrichtung besorgt oder zumindest unterstützt.

Vorzugsweise erfolgt die Hubbewegung in einer Richtung, die unter einem spitzen Winkel gegenüber der Bewegungsrichtung der Bahn liegt, wobei der Winkel einstellbar oder variierbar sein kann.

Der Winkel kann zwischen 30° und 89°, vorzugsweise zwischen 60° und 70° liegen.

Da eine feine wellenförmige Prägestruktur angestrebt wird, ist es wichtig, dass die Taktfrequenz der Werkzeugkante und die Vorschubgeschwindigkeit der Bahn miteinander synchronisiert werden. Erfahrungsgemäß soll die zu diesem Zweck erforderliche Taktfrequenz der Werkzeugkante zwischen 5 und 10 Hube pro Sekunde, vorzugsweise zwischen 6 und 8 Hube pro Sekunde und die Vorschubgeschwindigkeit der Bahn zwischen 20 mm/sek und 50 mm/sek liegen.

Auf dieser Weise erhält man ein Abdeckmaterial, dessen Folienschicht fein gewellt und ganzflächig mit dem klebrigen Bahnmaterial verbunden ist. Aus den die vorgenannten Parametern der Taktfrequenz der Werkzeugkante und der Vorschubgeschwindigkeit der Bahn ergibt sich eine wellenförmige Prägestruktur, deren Wellenberge bzw. -täler voneinander etwa 1,0 mm bis 5,0 mm entfernt sind, wobei die Berghänge bzw. Talflanken dem Einstellwinkel entsprechend der Hubbewegung auch geneigt sein können. Die Wellenbergenteilung der Prägestruktur ist auch von der Dicke der Werkzeugkante abhängig.

Bei der Formmasse handelt sich vorzugsweise um an sich bekannten, klebrigen Butylkautschuk. Vorzugsweise wird der Butylkautschuk durch eine Breitschlitzdüse eines Extruders herausgepresst und direkt auf eine Auflagefläche, noch bei einer erhöhten Temperatur, kontinuierlich aufgelegt.

Die Verformung kann bei einer Temperatur der extrudierten Formmasse zwischen 80° C und 120° C durchgeführt werden, wobei bei der Verformung die Extrusionsrestwärme der Formmasse genutzt wird. Nach der Verformung der Formmasse stellt sich eine höhere Viskosität ein.

Mit dem Verfahren gemäß der Erfindung läßt sich ein Produkt mit feiner kreppartigen Folienschicht herstellen, wobei das Produkt mit oder ohne Verstärkungsschicht herstellbar ist. Das Verfahren kann in Hinblick auf vorgenannte Parameter als Hochleistungsherstellungsprozess bezeichnet werden.

Eine Vorrichtung zur Durchführung des Verfahrens besteht aus:
- einem mit einer Breitschlitzdüse ausgestatteten Extruder,
- wenigstens einem im Betriebszustand die Hubbewegung ausübenden Schieber, der dem Extruder nachgeschaltet ist und der wenigstens eine Werkzeugkante aufweist,
- wenigstens einer oberhalb einer Auflagefläche angeordneten Vorratsrolle, von der eine Folienbahn zur Bildung der Folienschicht des Abdeckmaterials unter die Werkzeugkante des Schiebers zuführbar ist,
- wenigstens einer unterhalb der Auflagefläche angeordneten Vorratsrolle, von der ein von dem fertigen Abdeckmaterial abziehbarer Schutzfolienstreifen unter die Bahn zuführbar ist,
- und einem endlosen, waagerecht ausgerichteten Förderband, mit dem das fertige Abdeckmaterial einer Auslaufstrecke zuführbar ist, wobei ein Obertrum des Förderbandes im wesentlichen mit der Auflagefläche fluchtet.

Der Vorrichtung kann wenigstens eine weitere, unterhalb der Auflagefläche platzierte Vorratsrolle zugeordnet sein, von der ein bandförmiges Verstärkungsmaterial abgezogen wird. Das Verstärkungsmaterial ist zwischen die Bahn und die Schutzfolienstreifen zuführbar. Als Verstärkungsmaterial kann ein metallenes Gitternetz oder ein textiles, maschenartiges Flachgebilde eingesetzt sein, das ebenfalls bei erhöhter Temperatur des bahnförmigen Butylkautschuks mit diesem verklebt bzw. in dieses teilweise eingebettet werden kann.

Das Verstärkungsmaterial oder die Bahn auf ihrer klebrigen Seite kann von wenigstens einem Schutzfolienstreifen unterlegt sein. Vorzugsweise werden mehrere Schutzfolienstreifen verwendet, damit diese beim Einsatz des Abdeckmaterials am Bauort nach und nach abgezogen werden können.

Zu diesem Zweck kann die Vorrichtung mit mehreren Vorratsrollen ausgestattet sein, die auf eine gemeinsame Achse aufgesetzt sind, von denen im Betriebszustand jeweils ein Schutzfolienstreifen einem etwa flachparallel zur Auflagefläche angeordneten, flächigen und in Längsrichtung der Bahn verlaufenden Führungselement zugeleitet ist.

Vorzugsweise sind die gesamten Führungselemente zueinander treppenartig und überlappend angeordnet. Die Anzahl der Führungselemente entspricht der der Schutzfolienstreifen.

Zwischen den Vorratsrollen und den Führungselementen können mehrere quer zur Förderrichtung der Schutzfolienstreifen verlaufende Stangen übereinander leitersprossenartig angeordnet sein, die eine ungestörte Zuführung der einzelnen Schutzfolienstreifen in die entsprechenden flächigen Führungselemente ermöglichen. Da die Führungselemente überlappend angeordnet sind, ordnen sich die Schutzfolienstreifen dem vorgegebenen Verlauf ein.

Die Hubbewegung des Schiebers und damit der Werkzeugkante kann mithilfe wenigstens eines in Ebene der Hubbewegung angeordneten Linearantriebes erfolgen. So kann als Linearantrieb ein magnetischer oder hydraulischer Linearantrieb, ein elektrohydraulischer Linearantrieb, sogenannter Kurzhublinearantrieb oder dgl. zum Einsatz kommen. Denkbar sind auch digital gesteuerte Schrittmotoren.

Als besonders effektiv hat sich ein sogenannter Kontraktionsantrieb mit Kontraktionsschlauch erwiesen, der bei Druckbeaufschlagung mit Luft eine Längenkontraktion erfährt.

Die Hubbewegung kann auch mithilfe wenigstens eines Exzenterantriebes erfolgen.

Mithilfe der Vorrichtung läßt sich ein plastisch verformbares, mehrschichtiges, flächiges Abdeckmaterial gemäß dem Verfahren herstellen. Das Abdeckmaterial besteht im wesentlichen aus folgenden Teilen:
- einer Klebeschicht aus einer plastisch verformbaren, klebrigen Formmasse, welche Klebeschicht zwei gegenüberliegende Klebeflächen aufweist,
- wenigstens einer folienartigen Deckschicht, die auf der Klebefläche der Klebeschicht aufliegt, wobei die Formmasse und Deckschicht miteinander im wesentlichen durchgehend verbunden sind, und wobei die Deckschicht eine kreppartige oder gewellte Prägestruktur aufweist, die im Verlegezustand eine im wesentlichen spannungsfreie Ausdehnung und/oder Verformung der Deckschicht ermöglicht,
- und aus einer der Deckschicht gegenüberliegenden, abziehbaren Schutzschicht.

Vorteilhaft ist, dass die an der Dichtungsmasse fixierte Deckschicht sich nahezu spannungsfrei an extremen Krümmungen und Biegungen dehnen läßt. So trägt die kreppartige Struktur der Verbesserung der erwünschten Anschmiegsamkeit des Abdeckmaterials bei, ohne die bei der Verformung des Abdeckmaterials auftretenden Deformationskräfte zu beeinflüssen. Ein weiterer Vorteil ist, dass die Deckschicht sogar bei erheblichen Verformungskräften nicht reißt.

Das Adjektiv "kreppartig" bezieht sich im vorliegenden Fall auf eine dichte Anordnung von Vorsprüngen oder/und Vertiefungen oder anderen Ungleichmäßigkeiten der folienartigen Deckschicht. Dadurch ist die Gesamtfläche der Deckschicht eines Abdeckmaterialabschnitts erheblich größer als die der Klebe- bzw. der Stabilisationsschicht. Gerade dieser Überschuß an Gesamtfläche gegenüber der Fläche von Klebe- bzw. Stabilisationsschicht ermöglicht eine nahezu spannungsfreie Ausdehnung der stellenweise mit der Dichtungsmasse verklebten Deckschicht.

Die kreppartige Struktur kann aus einer dichten Anordnung von Vorsprüngen und/oder Vertiefungen bestehen, die beispielsweise zylindrisch, muldenförmig oder prismatisch sind.

In einer weiteren bevorzugten Ausführungsform kann die Struktur der Deckschicht aus einer dichten Anordnung von Vorsprüngen und/oder Vertiefungen bestehen, die in wenigstens einer Richtung, die etwa senkrecht zur Dehnrichtung des Abdeckmaterials liegt, wellenartig verlaufen. Diese Ungleichmäßigkeiten der Folienstruktur können beispielsweise mäander-, trapez-, omega- oder zick-zackförmig sein. Vorzugsweise verlaufen die wellenförmigen Vorsprüngen und/oder Vertiefungen in Längs- und Querrichtung des Abdeckmaterials.

Krepp- oder wellenartige Folien bzw. Verbundfolien sind an sich bekannt und werden beispielsweise zur Umhüllung von druckempfindlichen Gegenständen und zur Herstellung von Hygieneartikeln verwendet. Die letzteren sind überwiegend hydrophil, da sich um eine möglichst große Feuchtigkeitsaufnahmekapazität handelt.

Eine Deckschicht kann auch durch Auftragen einer flüssigen Kunststoffmasse auf die selbstklebende Klebeschicht und nachfolgendes Erstarren hergestellt sein. Hierzu können noch zusätzliche technische Maßnahmen vorgenommen werden, um die kreppartige Folienstruktur zu erhalten.

Die Deckschicht, im weiteren Kreppfolie genannt, kann eine Kunststoff-Folie, beispielsweise eine Polyester-, Polyvinylfluorid- oder Polyvinylchlorid-Folie von einer Dicke zwischen 10 µm und 60 µm, vorzugsweise zwischen 20 µm und 30 µm sein. Die Deckschicht kann auch eine Metallfolie sein.

In das Abdeckmaterial kann wenigstens eine maschenartige Stabilisationsschicht, wie Metallgitter, eingebaut sein. Die Stabilisationsschicht kann zwischen der Kreppfolie und der Klebeschicht und/oder zwischen der Klebeschicht und der abziehbaren Schutzschicht angeordnet sein.

Die maschenartige Stabilisationsschicht kann orthogonal anisotrop bis isotrop dehnbar sein, d. h. sie kann bibis mehraxial gereckt werden. Hierzu eignen sich polygonale, insbesondere rechteckige oder fünf- bzw. sechseckige Maschen. Die Maschen der Stabilisationsschicht können auch rund sein. Die Stabilisationsschicht kann ein plastisch verformbares Metallgitter von einem geringfügigen Rückstellvermögen sein.

Die Maschen können 5 mm bis 30 mm, vorzugsweise 8 mm bis 10 mm groß sein. Sollte das Maschenmaß unterhalb der vorgesehenen Grenze liegen, kann keine bzw. unzureichende Klebefläche zur Verfügung stehen, da sich das Metallgitter sehr schwer oder gar nicht in die Dichtungsmasse einbetten läßt.

Es ist denkbar, als Stabilisationsschicht ein Metallgewirke bzw. -geflecht einzusetzen, bei dem die einzelnen Maschen miteinander nicht verschweißt oder in sonstiger Weise miteinander fest verbunden sind. Voraussetzung dafür ist ein plastisch verformbares Metall von einem geringfügigen Rückstellvermögen, aus dem das Metallgewirke hergestellt ist.

Es ist nicht ausgeschlossen, die Stabilisationsschichten in einer mehrschichtigen Anordnung des Abdeckmaterials jeweils aus mehreren nebeneinander liegenden, mäander- oder zick-zackförmigen Drähten auszuführen, wobei die Drähte einer Stabilisationsschicht senkrecht zu den Drähten der anderen Stabilisationsschicht liegen.

Die Stabilisationsschicht kann derart in die Dichtungsmasse eingebettet sein, dass das klebrige Material der Dichtungsmasse durch die Maschen begrenzt ist und damit die Klebefläche zur Anbringung des Abdeckmaterials am jeweiligen Bauwerksteil bildet, wobei die abziehbare Schutzschicht und die gegenüber liegende Deckschicht sowohl mit der Klebeschicht als auch mit der maschenartigen Stabilisationsschicht in Kontakt stehen. Bei dieser Anordnung stellt die Gesamtklebefläche eine Summe von einzelnen, durch das Metallgitter abgegrenzten Feldern der Dichtungsmasse dar.

Die als Deckschicht bezeichnete Kreppfolie kann aus einer Metallfolie oder aus einer handelsüblichen Polyolefin-Folie, beispielsweise aus einer Polyvinylfluorid-Folie hergestellt sein. Wichtig sind die Eigenschaften der Folie, die das Abdeckmaterial zu einer Anwendung im äußeren Bereich der Bauwerksteile prädistinieren. Zu diesen Eigenschaften zählen u. a. Hydrophobie sowie die UV- und Witterungsbeständigkeit der Kreppfolie. Die Kreppfolie kann auch mikroperforiert sein unter Beibehaltung der vorgenannten Eigenschaften.

Ausführungsbeispiele der Erfindung sind anhand der Zeichnung näher erläutert. Die Figuren zeigen:
- Fig. 1: schematisch eine Vorrichtung zur Herstellung von Abdeckmaterial nach dem Verfahren gemäß der Erfindung, in einer Seitenansicht;
- Fig. 2: einen Schieber mit Werkzeugkante bei der Herstellung von Abdeckmaterial, in einer perspektivischen Ansicht;
- Fig. 3: einen Rahmen mit Schieber und Werkzeugkante sowie mit einem Kontarktionantrieb, in einer Stirnansicht;
- Figuren 4a und 4b: Wellenformen der Folienschicht; perspektivisch;
- Fig. 5: Anordnung der Führungselemente für Schutzfolienstreifen, in einer Stirnansicht;
- Fig. 6: Detail der Vorrichtung gemäß der Fig. 1 mit sichtbaren Führungselementen gemäß der Fig. 5 und leitersprossenartig übereinander liegenden Stangen, in einer perspektivischen Ansicht von unten;
- Fig. 7: Führungselemente gemäß den Figuren 5 und 6 in Draufsicht;
- Fig. 8: einen Verlauf der Schutzfolienstreifen zwischen Vorratsrollen und den Führungselementen, in einer perspektivischen Ansicht von oben;
- Fig. 9: eine unterhalb der Werkzeugkante angeordnete Führungsrolle,
- Fig. 10: einen Abdeckmaterial-Abschnitt gemäß einer ersten Ausführungsform, in einer perspektivischen Ansicht;
- Fig. 11: einen Schnitt B-B gemäß der Fig. 10;
- Fig. 12: einen Eckbereich des Abdeckmaterial-Abschnittes gemäß der Fig. 1 mit sichtbarer Deckschicht, in einer perspektivischen Ansicht;
- Fig. 13: einen Abdeckmaterial-Abschnitt gemäß einer zweiten Ausführungsform, in einer perspektivischen Explosionsdarstellung;
- Figuren 14 bis 16: Maschenformen der Stabilisationsschichten;
- Fig. 17: unterschiedliche Strukturen der Deckschicht, in einer vereinfachten perspektivischen Ansicht;
- Fig. 18: eine wellenartig in zwei Richtungen verlaufende, zick-zackförmige Struktur der Deckschicht, in einer schematischen Draufsicht;
- Fig. 19: den Abdeckmaterial-Abschnitt gemäß der Fig. 13, verlegt auf einen komplizierten Übergang eines Bauwerksteils;
- Fig. 20: Abdeckung eines Bauwerksspaltes am Dach, in einer perspektivischen Ansicht.

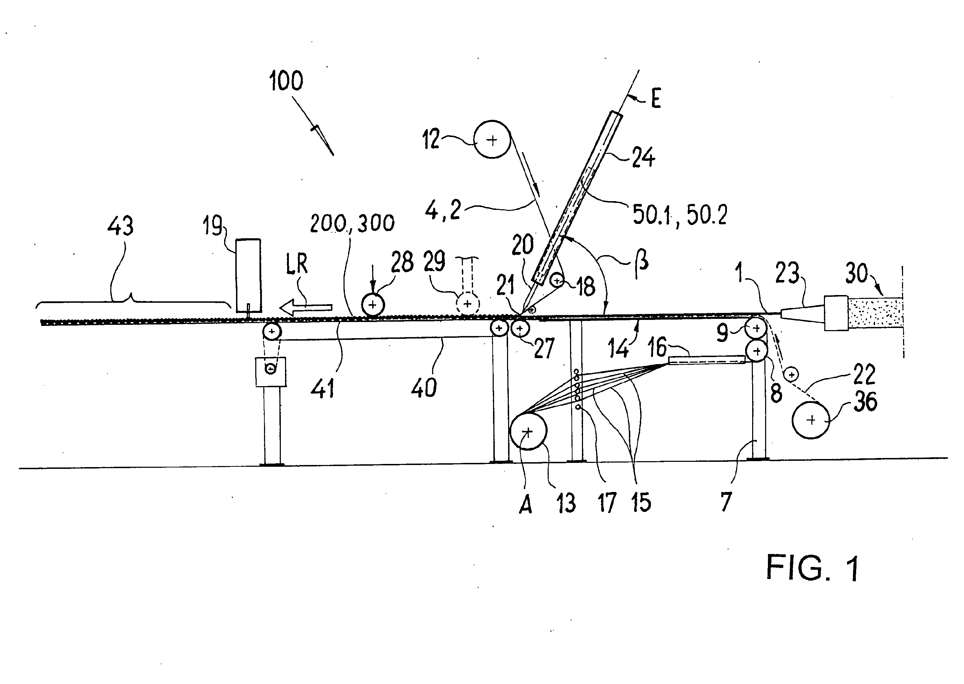

In der Fig. 1 ist eine Vorrichtung 100 zur Herstellung eines flächigen Abdeckmaterials 3 für Bauzwecke, die sich aus folgenden Teilen:
- einem mit einer Breitschlitzdüse 23 versehenen Extruder 30,
- einem im Betriebszustand die Hubbewegung ausübenden Schieber 20 mit einer darin angebrachten Werkzeugkante 21,
- einer oberhalb einer Auflagefläche 14 angeordneten Vorratsrolle 12, von der eine Folienbahn 4 zur Bildung der Folienschicht 2 des Abdeckmaterials 3 unter die Werkzeugkante 21 zuführbar ist,
- mehreren unterhalb der Auflagefläche 14 angeordneten Vorratsrollen 13, von denen die Schutzfolienstreifen 15.1....15.5 unter die Bahn 1 zuführbar sind,
- und einem endlosen, waagerecht ausgerichteten Förderband 40, mit dem das fertige Abdeckmaterial 3 einer Auslaufstrecke 43 zuführbar ist,

### zusammensetzt.

Wie aus der Fig. 1 erkennbar, liegt das Förderband 40 mit seinem Obertrum 41 auf der Höhe der Auflagefläche 14. Die Auslaufstrecke 43 schließt sich an das Förderband 40 ebenfalls horizontal bzw. leicht geneigt an.

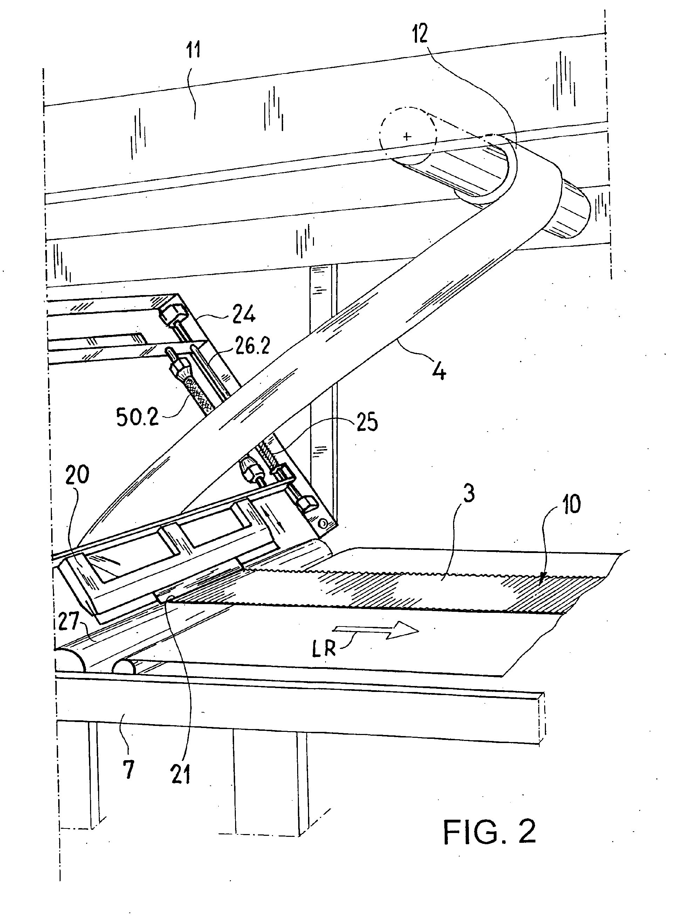

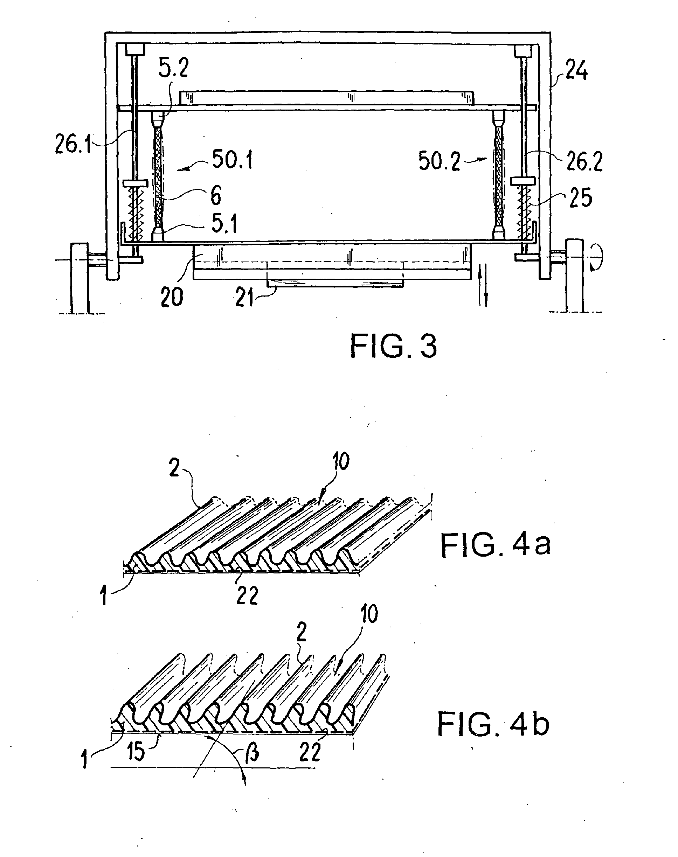

Die in den Schieber 20 eingeschobene und dort fixierte, auswechselbare Werkzeugkante 21 ist in den Figuren 2 und 3 gezeigt. Die Werkzeugkante 21 ist senkrecht gegenüber der Längsrichtung LR der Bahn (vgl. Figuren 1 und 2) ausgerichtet. Der Schieber 20 ist in einen Rahmen 24 integriert, der gegenüber der Auflagefläche 14 unter einem einstellbaren, spitzen Winkel β angeordnet ist, wobei die Winkelspitze auf die Förderrichtung zeigt. Durch die Winkeleinstellung des Rahmens 24 wird die Werkzeugkante 21 positioniert. Die Länge der Werkzeugkante 21 ist der vorbestimmten Breite des Abdeckmaterials angepasst.

Die Hubbewegung des Schiebers 20 erfolgt mithilfe zweier in Rahmenebene liegenden Kontraktionsantriebe 50.1, 50.2. Als Kontraktionsantriebe kommen sogenannte fluidic muscle der Firma FESTO AG & Co, Esslingen, zum Einsatz. Zwischen den Kopfstücken 5.1., 5.2 des Kontraktionsantriebes erstreckt sich ein gesteuert fluidbeaufschlagbarer Kontraktionsschlauch 6, welcher in seiner Längsrichtung abwechselnd eine Kontraktion und eine Streckung erfährt. Das Konstruktions- und Wirkungsprinzip des Kontraktionsantriebes ist an sich bekannt und kann den Patentanmeldungen der Firma FESTO, beispielsweise der DE 103 14 819 A1, entnommen werden.

Der Schieber 20 ist längs zweier am Rahmen 24 befestigten und entlang der Kontraktionsantriebe verlaufenden Führungselemente 26.1, 26.2, und zwar in einer Ebene E, die der Hubbewegungsrichtung entspricht, bewegbar angeordnet. Die rohrförmigen Führungselemente 26.1, 26.2 sind jeweils mit einer einstellbaren Schraubenfeder 25 versehen, welches für die erforderliche Schlagkraft der Werkzeugkante 21 sorgt.

Der Werkzeugkante 21 ist ein Zählwerk 29 und eine Andruckrolle 28 nachgeschaltet.

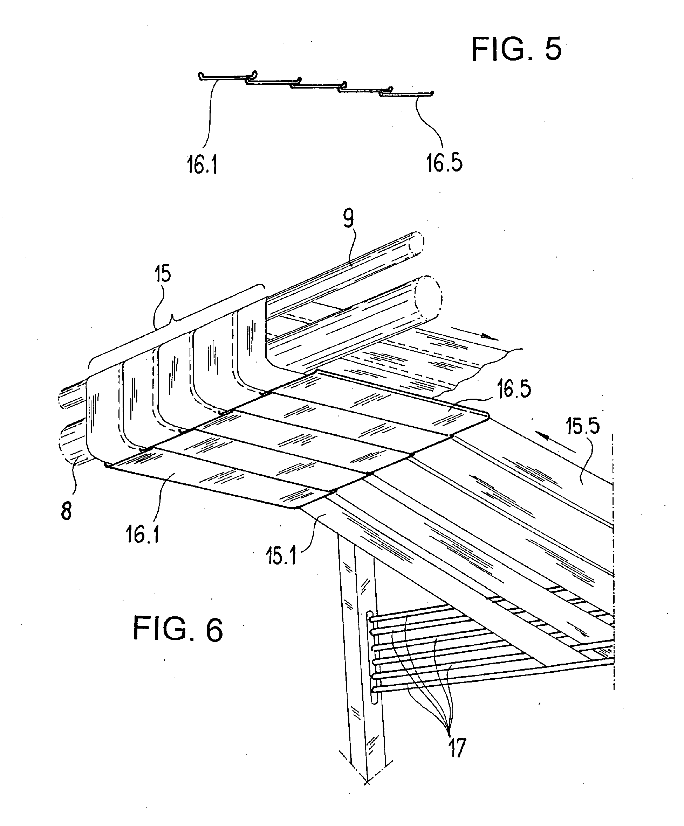

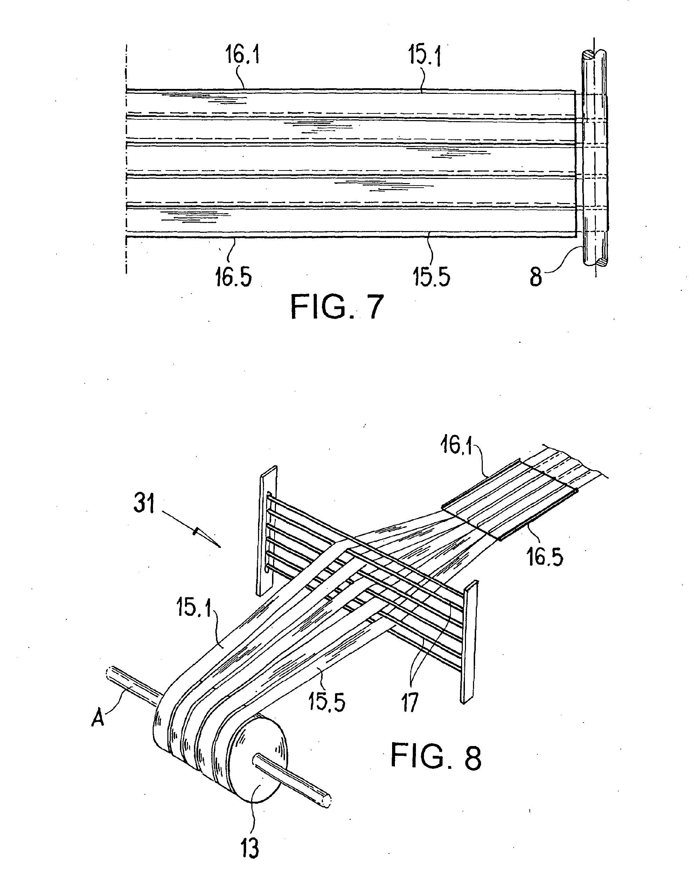

In den Figuren 5 bis 8 ist ein Schutzfolienstreifen-Verlauf 31 gezeigt. Fünf Vorratsrollen 13 sind auf eine gemeinsame Achse A aufgesetzt, von denen im Betriebszustand jeweils ein Schutzfolienstreifen einem flachparallel zur Auflagefläche 14 angeordneten, flächigen und in Längsrichtung LR der Bahn 1 verlaufenden Führungselement 16.1...16.5 zugeleitet wird.

Die Führungselemente 16.1...16.5 sind zueinander treppenartig und überlappend (vgl. insbesondere Fig. 5) angeordnet. Zwischen den Vorratsrollen 13 und den Führungselementen 16.1...16.5 befinden sich noch mehrere quer zum Schutzfolienstreifen-Verlauf angeordnete Stangen 17. Da diese übereinander leitersprossenartig angeordnet sind, werden die einzelnen Schutzfolienstreifen 15.1...15.5 ungestört den entsprechenden flächigen Führungselementen 16.1...16.5 zugeführt und zur Überlappung gebracht.

In einem anderen Beispiel ist der Schieber mit der Werkzeugkante 21 mithilfe der bekannten Exzenterantriebe (nicht dargestellt) in Hubbewegung versetzbar.

### Funktion der Vorrichtung (vgl. insbesondere Fig. 1):

Von den Vorratsrollen 13 werden Schutzfolienstreifen 15.1...15.5 über Führungselemente 16.1..16.5 und Umlenkrollen 8, 9 auf eine Auflagefläche 14 eines Gestells 7 kontinuierlich aufgelegt. Gleichzeitig wird von einer Vorratsrolle 36 eine Verstärkungsschicht 22, ebenfalls über die obere Umlenkrolle 9 geführt und auf eine Schutzfolienschicht 15, die durch die Überlappung der Schutzfolienstreifen 15.1...15.5 entstanden ist (vgl. Fig. 6), aufgelegt. Die Verstärkungsschicht 22 besteht aus einem Drahtgitter.

Die Formmasse (Butylkautschuk) wird über eine Schnecke des Extruders 30 und über eine Breitschlitzdüse 23 in Form einer Bahn 1 von der Breite etwa 35 cm direkt auf die Stabilisationsschicht 22 aufgelegt und noch erhitzt, bei einer Temperatur etwa 100° C, unter die Werkzeugkante 21 des Schiebers 20 geführt. Zugleich wird von einer am oberen Rahmen 11 des Gestells gelagerten Vorratsrolle 12 eine Folienbahn 4 abgezogen und über eine weitere Umlenkrolle 18 ebenfalls unter die Werkzeugkante 21 kontinuierlich zugeführt.

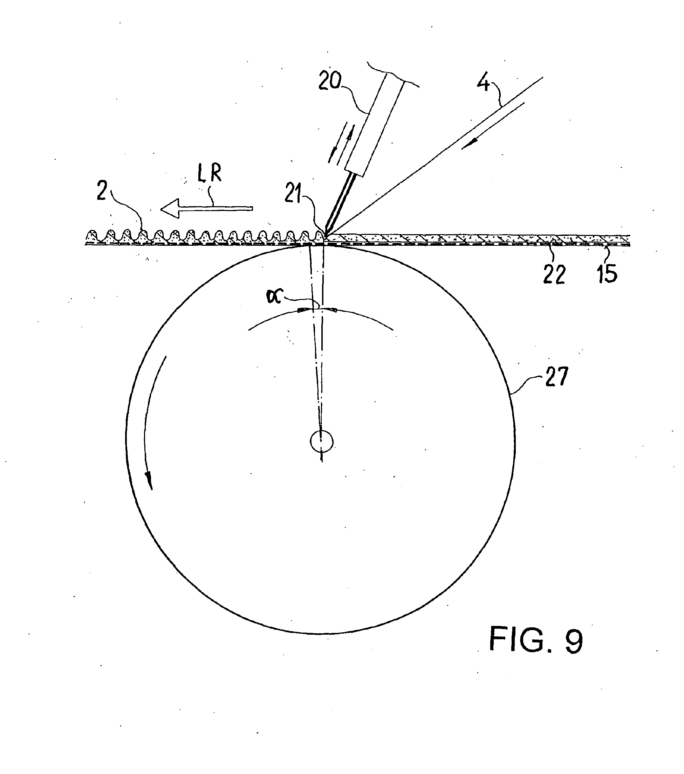

Durch die durch Kontraktionsantriebe 50.1, 50.2 hervorgerufene Hubbewegung der Werkzeugkante 21 wird die Folienbahn 4 zu einer wellenförmigen Deckschicht 2 (vg. Figuren 4a und 4b) kontinuierlich gestaucht. Vorzugsweise wird am Scheitel einer sich drehenden Führungsrolle 27 gestaucht, deren Drehbewegung durch die geneigte Werkzeugkante 21 erzwungen wird. Demnach dreht sich die Führungsrolle 27 infolge der rythmischen Schläge der Werkzeugkante 21 jeweils um einen geringfügigen Drehwinkel α. Diese Situation zeigt die Fig. 9.

Durch die rythmischen Schläge der Werkzeugkante 21 vertiefen die Wellentäler der Deckchicht 2 in den noch etwa 100° C warmen Butylkautschuk. Es entsteht ein ganzflächiger Klebeverbund. Da die Hubbewegung der Werkzeugkante 21 unter einem Winkel β = 80° erfolgt, ergibt sich eine feine wellenförmige Prägestruktur 10, deren Wellenbergenteilung etwa 2,5 mm groß ist. Die Taktfrequenz der die Hubbewegung ausübenden Werkzeugkante 21 beträgt im vorliegenden Fall 7 Hube pro Sekunde. Die Vorschubgeschwindigkeit der Bahn und damit des fertigen Abdeckmaterials 200; 300 beträgt etwa 40 mm/sec.

Das streifenförmige Abdeckmaterial wird über ein Förderband 40 auf eine Auslaufstrecke 43 transportiert. Zwischen dem Förderband 40 und der Auslaufstrecke 43 befindet sich noch ein Schneidwerkzeug 19, mit dem das Abdeckmaterial in etwa 3m lange Abschnitte abgelängt wird.

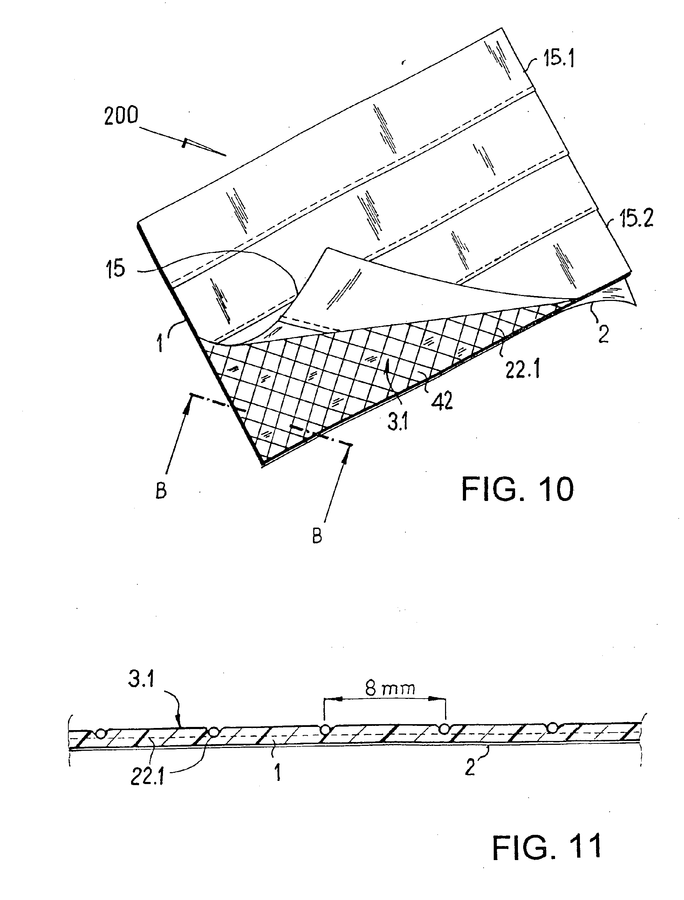

In den Figuren 10, 11 und 12 ist ein rechteckiger Abschnitt des gemäß dem Verfahren hergestellten Abdeckmaterials 200 dargestellt, bestehend aus einer selbstklebenden Klebeschicht 1, einer mit der Klebeschicht fest verklebten Deckschicht 2, einer Stabilisationsschicht 22.1 und einer der Deckschicht 2 gegenüber liegenden, abziehbaren Schutzschicht 15. Die Stabilisationsschicht 22.1 liegt zwischen der Klebeschicht 1 und der abziehbaren Schutzschicht 15.

Die Klebeschicht 1 besteht aus einer selbstklebenden, dehnfähigen, plastich verformbaren Dichtungsmasse auf Butylkautschukbasis. Die Dicke der Klebeschicht 1 beträgt etwa 1,5 mm.

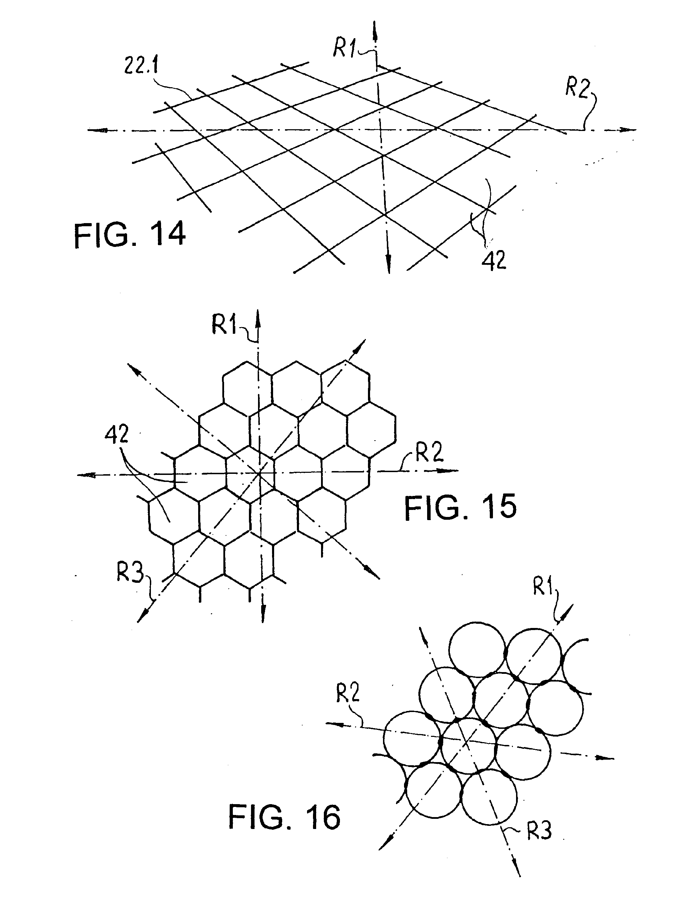

Die maschenartige Stabilisationsschicht 22.1 liegt in Form eines bleibend verformbaren Metallgitters aus Aluminiumlegierung vor, dessen rechteckige, mit Bezugszahl 42 bezeichnete Maschen 8 mm groß sind. Wie in der Fig. 14 angedeutet, ist das Metallgitter grundsätzlich in zwei diagonalen Richtungen R1, R2 streckbar.

Die Fig. 15 zeigt einen anderen Aufbau der Stabilisationsschicht. Ihre etwa 10 mm große, heksagonale Maschen 42 erlauben eine Dehnung in praktisch allen Richtungen (auf der Figur sind drei Richtungen mit R1, R2, R3 bezeichnet).

Eine weitere, in Frage kommende Konfiguration der Stabilisationsschicht ist in der Fig. 16 dargestellt. Die Maschen 42 sind rund und daher lassen sich ebenfalls in allen Richtungen ausdehnen.

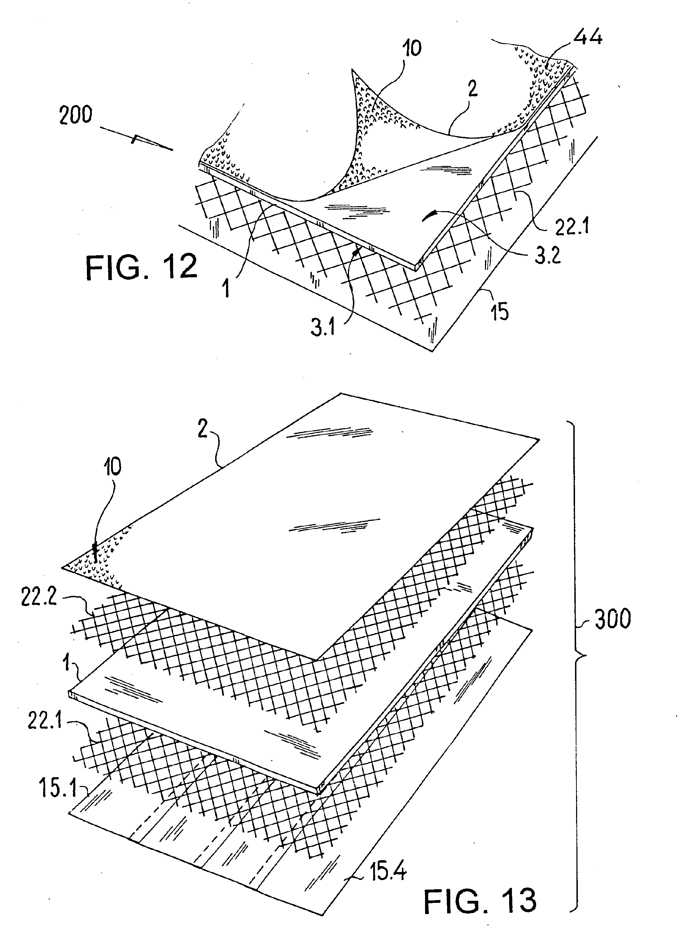

Die Deckschicht 2 besteht aus einer UV- und witterungsbeständigen Polyvinylfluorid-Folie (Handelsname TEDLAR, Du Pont) von einer Dicke 20 µm. Die Polyvinylfluorid-Folie stellt ein gutes Schutzmaterial dar, das stark gedehnt werden kann, ohne zu reißen. Die Deckschicht 2 schützt die Dichtungsmasse vor Staub und Witterungseinflüssen und verbessert zugleich die Handhabung des Abdeckmaterials, da seine Klebeschicht stark klebrige Eigenschaften aufweist. Ferner ist der Fig. 12 eine kreppartige, durch eine Vielzahl von Vertiefungen 44 erhaltene Prägestruktur 10 der Deckschicht 2 "(Kreppfolie") sowie eine der Klebefläche 3.1 gegenüber liegende Klebefläche 3.2 der Klebeschicht 1 zu entnehmen.

Die gegenüber der Kreppfolie liegende Schutzschicht 15 besteht aus mehreren sich überlappenden Silikonpapier-Streifen 15.1...15.4, die während der Verlegung des Abdeckmaterials nach und nach abgezogen werden und geben damit die Klebefläche 3.1 der Dichtungsmasse frei.

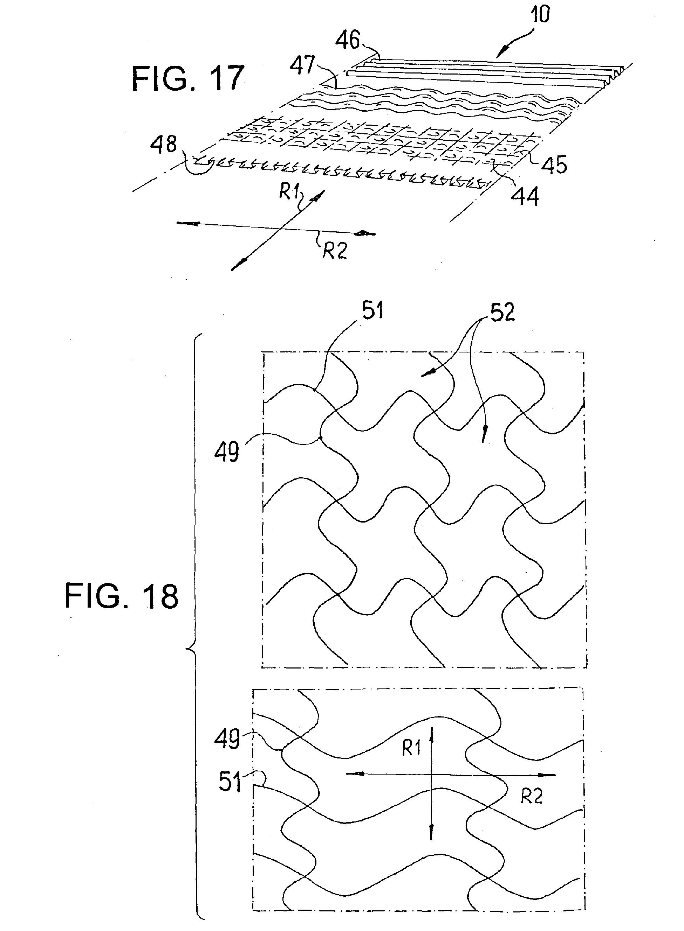

In der Figur 17 sind unterschiedliche, vereinfacht dargestellte Prägestrukturen der Kreppfolie zu sehen. Im vorliegenden Beispiel besteht die Prägestruktur 10 aus einer Vielzahl von nebeneinander liegenden Vertiefungen 44 und Vorsprüngen 45 oder aus einer Vielzahl von wellenförmigen, parallel zueinander verlaufenden Erhebungen, die entweder geradlinig (bei 46), wie bei dem bekannten Krepppapier, oder sinusförmig (bei 47) sein können. Die kreppartige Struktur kann auch aus einer Vielzahl von trapezförmigen Vertiefungen und/oder Vorsprüngen (bei 48) bestehen.

Die Fig. 18 zeigt in einer sehr starken Vergrößerung eine wellen- bzw. zickzackförmige Struktur der Kreppfolie, bei der die entlang der Richtung R1 verlaufenden Zickzacklinien 49 sich mit den Zickzacklinien 51, die entlang der Richtung R2 geführt sind, kreuzen. Die Zickzacklinien 49, 51 entsprechen den Verklebungsbereichen der Kreppfolie an der Klebeschicht, dagegen sind die mit 52 bezeichneten Felder (Erhebungen) nicht mit der Klebeschicht verklebt. Das kleinere Bild in der Fig. 18 zeigt die entlang der Richtung R2 gedehnte Kreppfolie.

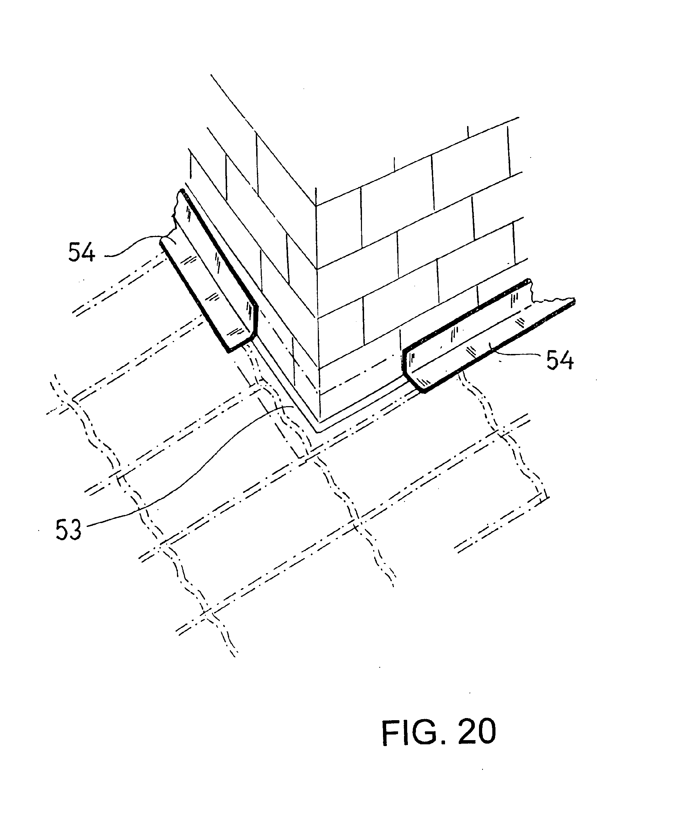

Die Anwendung des Abdeckmaterials 200 ist in der Fig. 20 dargestellt. Eine umlaufende Bauwerksfuge 53 zwischen Schornsteinwänden und einer angrenzenden Dacheindeckung wird wasserdicht mit entsprechend nach Maß zugeschnittenen Abdeckmaterial-Streifen 54 abgedeckt. Die sichtbare, den Witterungseinflüssen ausgesetzte Kreppfolie kann farbig den Dacheindeckungselementen angepaßt werden.

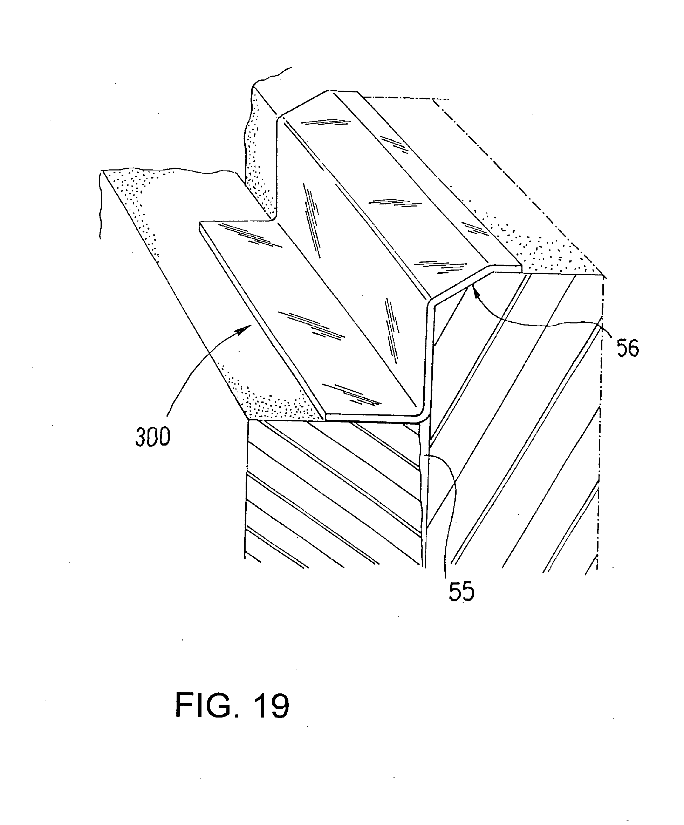

Die Fig. 13 zeigt ein verstärktes Abdeckmaterial 300, bei dem noch eine zweite, zwischen der Klebeschicht 1 und der Kreppfolie liegende Stabilisationsschicht 22.2 zum Einsatz kommt. So sind in die Klebeschicht 1 zwei maschenartige Stabilisationsschichten 22.1, 22.2 eingebettet und sorgen für eine gute Lagestabilität des auf einen schwierigen Übergang mit einem Bauwerkspalt 55 und einer Krümmung 56 verlegten Abdeckmaterials 300 (vgl. Fig. 19).

Das Abdeckmaterial 200; 300 kann in Bogen- bzw. Bahnform gelagert und transportiert werden. Es läßt sich auch einrollen.

### Bezugszeichenliste:

- 1: Klebeschicht
- 2: Deckschicht
- 3.1, 3.2: Klebefläche
- 4: Folienbahn
- 5.1, 5.2: Kopfstück
- 6: Kontraktionsschlauch
- 7: Gestell
- 8: Umlenkrolle
- 9: Umlenkrolle
- 10: Prägestruktur
- 11: Rahmen (v. 7)
- 12: Vorratsrolle
- 13: Vorratsrolle
- 14: Auflagefläche
- 15: Schutzschicht
- 15.1...15.5: Schutzfolienstreifen
- 16: Führungselement (flach)
- 17: Stange
- 18: Umlenkrolle
- 19: Schneidwerkzeug
- 20: Schieber
- 21: Werkzeugkante
- 22.1, 22.2: Stabilisationsschicht
- 23: Breitschlitzdüse
- 24: Rahmen
- 25: Schraubenfeder
- 26.1, 26.2: Führungselement
- 27: Führungsrolle
- 28: Andruckrolle
- 29: Zählwerk
- 30: Extruder
- 31: Schutzfolienstreifen-Verlauf
- 33: Achse
- 36: Vorratsrolle
- 40: Förderband
- 41: Obertrum
- 42: Masche
- 43: Auslaufstrecke
- 44: Vertiefung
- 45: Vorsprung
- 46, 47: Erhebung
- 48: Vorsprung (trapezförmig)
- 49: Zickzacklinie
- 50.1, 50.2: Kontraktionsantrieb
- 51: Zickzacklinie
- 52: Erhebung
- 53: Bauwerkfuge
- 54: Abdeckmaterial-Streifen
- 55: Bauwerkspalt
- 56: Krümmung

- 100: Vorrichtung
- 200; 300: Abdeckmaterial

- α: Drehwinkel
- β: Winkel
- E: Ebene
- LR: Längsrichtung (v.1)

## Patentansprüche

**1.** Verfahren zur Herstellung eines flächigen Abdeckmaterials für Bauzwecke, das folgende Schichtung umfasst:
- eine Klebeschicht (1) aus einer plastisch verformbaren, klebrigen Formmasse,
- auf einer Seite der Klebeschicht wenigstens eine Deckschicht (2),
- wobei Formmasse und Deckschicht (2) im wesentlichen durchgehend miteinander verbunden und dreidimensional verformt sind,
**gekennzeichnet durch** folgende Verfahrensschritte:
(a) die zur Klebeschicht (1) bestimmte Formmasse wird als Bahn auf eine Förderstrecke extrudiert,
(b) die Deckschicht (2) wird mit der Bahn in Kontakt gebracht,
(c) die Deckschicht (2) und die mit ihr verbundene Bahn (1) werden **durch** rhythmische, relative Hubbewegung einer Werkzeugkante (21) zur Folienoberfläche, die in die Oberfläche eintaucht, mit einer kreppartigen Oberflächenformation versehen, wobei die Werkzeugkante (21) den Vorschub der Bahn in Förderrichtung besorgt oder zumindest unterstützt.

**2.** Verfahren nach Anspruch 1, **dadurch gekennzeichnet, dass** die Hubbewegung in einer Richtung (E) erfolgt, die unter einem spitzen Winkel (β) gegenüber der Bewegungsrichtung der Bahn liegt.

**3.** Verfahren nach Anspruch 1 oder 2, **dadurch gekennzeichnet, dass** sich bei der Formmasse nach Verformung eine höhere Viskosität einstellt oder die Formmasse auf eine höhere Viskosität eingestellt wird.

**4.** Verfahren nach Anspruch 3, **dadurch gekennzeichnet, dass** bei der Verformung die Extrusionsrestwärme der Formmasse genutzt wird.

**5.** Verfahren nach einem der vorhergehenden Ansprüche, **dadurch gekennzeichnet, dass** als Formmasse klebender Butylkautschuk verwendet wird.

**6.** Verfahren nach einem der vorhergehenden Ansprüche, **dadurch gekennzeichnet, dass** der Winkel (β) der Werkzeug-Hubbbewegungsrichtung (E) einstellbar oder variierbar ist.

**7.** Verfahren nach Anspruch 6, **dadurch gekennzeichnet, dass** der Winkel (β) zwischen 30° und 89°, vorzugsweise zwischen 60° und 70° liegt.

**8.** Verfahren nach einem der vorhergehenden Ansprüche, **dadurch gekennzeichnet, dass** die Taktfrequenz der Werkzeugkante (21) und die Vorschubgeschwindigkeit der Bahn derart miteinander synchronisiert werden, dass sich beim Stauchen eine wellenförmige Prägestruktur (10) ergibt.

**9.** Verfahren nach Anspruch 8, **dadurch gekennzeichnet, dass** die Taktfrequenz der Werkzeugkante (21) zwischen 5 und 10 Hube pro Sekunde, vorzugsweise zwischen 6 und 8 Hube pro Sekunde und die Schubgeschwindigkeit der Bahn zwischen 20 mm/sek und 50 mm/sek liegt.

**10.** Verfahren nach einem der vorhergehenden Ansprüche, **dadurch gekennzeichnet, dass** die Verformung bei einer Temperatur der extrudierten Formmasse zwischen 80° C und 120° C durchgeführt wird.

**11.** Verfahren nach einem der vorhergehenden Ansprüche, **dadurch gekennzeichnet, dass** die Formmasse mit einer abziehbaren Schutzschicht (15) unterlegt wird.

**12.** Verfahren nach einem der vorhergehenden Ansprüche, **dadurch gekennzeichnet, dass** zwischen Schutzschicht (15) und Formmasse und/oder zwischen der Formasse und Deckschicht (2) kontinuierlich eine Stabilisationsschicht (22.1, 22.2) eingebaut wird.

**13.** Verfahren nach einem der vorhergehenden Ansprüche, **dadurch gekennzeichnet, dass** die Werkzeugkante (21) beim Stauchen über das Material der Klebeschicht (1), der Schutzschicht (15) und gegebenenfalls der Stabilisationsschicht (22) gegen den Scheitel einer Führungsrolle (27) stößt und ihre Drehbewegung erzwingt.

**14.** Vorrichtung zur Durchführung des Verfahrens nach Anspruch 1, bestehend aus:
- einem mit einer Breitschlitzdüse (23) ausgestatteten Extruder (30),
- wenigstens einem im Betriebszustand die Hubbewegung ausübenden Schieber (20), der dem Extruder (30) nachgeschaltet ist und der wenigstens eine Werkzeugkante (21) aufweist,
- wenigstens einer oberhalb einer Auflagefläche (14) angeordneten Vorratsrolle (12), von der eine Folienbahn zur Bildung der Deckschicht (2) des Abdeckmaterials unter die Werkzeugkante (21) des Schiebers (20) zuführbar ist,
- wenigstens einer unterhalb der Auflagefläche (14) angeordneten Vorratsrolle (13), von der ein von dem fertigen Abdeckmaterial abziehbarer Schutzfolienstreifen (15.1...15.5) unter die bahnförmige Klebeschicht (1) zuführbar ist,
- und einem endlosen, waagerecht ausgerichteten Förderband (40), mit dem das fertige Abdeckmaterial einer Auslaufstrecke (43) zuführbar ist, wobei ein Obertrum (41) des Förderbandes (40) im wesentlichen mit der Auflagefläche (14) fluchtet.

**15.** Vorrichtung nach Anspruch 14, **dadurch gekennzeichnet, dass** unterhalb der Auflagefläche (14) eine weitere Vorratsrolle (36) angeordnet ist, von der ein bandförmiges Verstärkungsmaterial zur Bildung der Stabilisationsschicht (22) zwischen die Bahn (1) und die Schutzfolienstreifen (15.1...15.5) zuführbar ist.

**16.** Vorrichtung nach Anspruch 14, **dadurch gekennzeichnet, dass** die Hubbewegung des Schiebers (20) mithilfe wenigstens eines in Ebene der Hubbewegung angeordneten Linearantriebes erfolgt.

**17.** Vorrichtung nach Anspruch 16, **dadurch gekennzeichnet, dass** als Linearantrieb ein Kontraktionsantrieb (50.1, 50.2) eingesetzt ist.

**18.** Vorrichtung nach Anspruch 16, **dadurch gekennzeichnet, dass** die Hubbewegung des Schiebers (20) mithilfe wenigstens eines Exzenterantriebes erfolgt.

**19.** Vorrichtung nach einem der Ansprüche 16 bis 18, **dadurch gekennzeichnet, dass** der Schieber (20) längs zweier an einem Rahmen (24) ortsfest angeordneten Führungselemente (26.1, 26.2) bewegbar ist.

**20.** Vorrichtung nach Anspruch 19, **dadurch gekennzeichnet, dass** die Führungselemente (26.1, 26.2) jeweils mit einem einstellbaren Federelement, wie Schraubenfeder (25), versehen sind, welches für die entsprechende Schlagkraft der Werkzeugkante (21) sorgt.

**21.** Vorrichtung nach Anspruch 19 und 20, **dadurch gekennzeichnet, dass** die Führungselemente (26.1, 26.2) Stangen oder Rohre sind.

**22.** Vorrichtung nach Anspruch 14, **dadurch gekennzeichnet, dass** mehrere Vorratsrollen (13) auf einer gemeinsamen Achse (33) aufgesetzt sind, von denen im Betriebszustand jeweils ein Schutzfolienstreifen (15.1....15.5) einem etwa flachparallel zur Auflagefläche (14) angeordneten, flächigen und in Längsrichtung (LR) der Bahn (1) verlaufenden Führungselement (16) zugeführt ist.

**23.** Vorrichtung nach Anspruch 22, **dadurch gekennzeichnet, dass** die gesamten Führungselemente (16) für die Schutzfolienstreifen (15.1....15.5) zueinander treppenartig und überlappend angeordnet sind.

**24.** Vorrichtung nach Anspruch 22 und 23, **dadurch gekennzeichnet, dass** zwischen den Vorratsrollen (13) und den Führungselementen (16) mehrere quer zur Förderrichtung der Schutzfolienstreifen verlaufende Stangen (17) übereinander leitersprossenartig angeordnet sind.

**25.** Vorrichtung nach einem der vorhergehenden Ansprüche, **dadurch gekennzeichnet, dass** dem Förderband (40) eine Führungsrolle (27) vorgeschaltet ist, deren Scheitel etwa auf der Höhe der Auflagefläche (14) liegt.

**26.** Vorrichtung nach einem der vorhergehenden Ansprüche, **dadurch gekennzeichnet, dass** am Obertrum (41) des Förderbandes (40) wenigstens eine Andruckrolle (28) angeordnet ist, die gegen das fertige Abdeckmaterial (3) drückt.

**27.** Vorrichtung nach einem der vorhergehenden Ansprüche, **dadurch gekennzeichnet, dass** am Obertrum (41) des Förderbandes (40) ein Zählwerk (29) angeordnet ist.

**28.** Plastisch verformbares, mehrschichtiges flächiges Abdeckmaterial (200; 300) für Bauzwecke, hergestellt gemäß dem Verfahren nach Anspruch 1, bestehend aus:
- einer Klebeschicht (1) aus einer plastisch verformbaren, klebrigen Formmasse, welche Klebeschicht zwei gegenüberliegende Klebeflächen (3.1, 3.2) aufweist,
- wenigstens einer folienartigen Deckschicht (2), die auf der Klebefläche (3.2) der Klebeschicht (1) aufliegt, wobei die Formmasse und Deckschicht (2) miteinander im wesentlichen durchgehend verbunden sind, und wobei die Deckschicht (2) eine kreppartige oder gewellte Prägestruktur (10) aufweist, die im Verlegezustand eine im wesentlichen spannungsfreie Ausdehnung und/oder Verformung der Deckschicht (2) ermöglicht,
- und aus einer der Deckschicht (2) gegenüberliegenden, abziehbaren Schutzschicht (15).

**29.** Abdeckmaterial nach Anspruch 28, **dadurch gekennzeichnet, dass** auf wenigstens einer Klebefläche (3.1, 3.2) der Klebeschicht (1) wenigstens eine bleibend verformbare, maschige Stabilisationsschicht (22.1, 22.2) angeordnet ist.

**30.** Abdeckmaterial nach Anspruch 28, **dadurch gekennzeichnet, dass** die Prägestruktur (10) eine dichte Anordnung von Vorsprüngen und/oder Vertiefungen aufweist, die zylindrisch, muldenförmig oder prismatisch sind.

**31.** Abdeckmaterial nach Anspruch 28, **dadurch gekennzeichnet, dass** die Prägestruktur (10) eine dichte Anordnung von Vorsprüngen und/oder Vertiefungen aufweist, die in wenigstens einer Richtung (R1, R2), die etwa senkrecht zur Dehnrichtung des Abdeckmaterials liegt, wellenartig verlaufen.

**32.** Abdeckmaterial nach Anspruch 31, **dadurch gekennzeichnet, dass** die in wenigstens einer Richtung (R1, R2) wellenartig verlaufenden Vorsprünge und/oder Vertiefungen mäander-, trapez-, omega- oder zickzack-förmig sind.

**32.** Abdeckmaterial nach Anspruch 28, **dadurch gekennzeichnet, dass** die bleibend verformbare Stabilisationsschicht (22.1, 22.2) orthogonal anisotrop bis isotrop dehnbar ist, wobei die Dehnbarkeit der Deckschicht (2) die der Stabilisationsschicht überschreitet.

**33.** Abdeckmaterial nach Anspruch 28, **dadurch gekennzeichnet, dass** dieses zwei Stabilisationsschichten (22.1, 22.2) aufweist, von denen die eine zwischen der Klebeschicht (1) und der Deckschicht (2) und die andere zwischen der Klebeschicht (1) und der abziehbaren Schutzschicht (15) liegt.

**34.** Abdeckmaterial nach Anspruch 28, **dadurch gekennzeichnet, dass** die an der Klebeschicht (1) fixierte Deckschicht (2) durch Auftragen einer flüssigen Beschichtung auf die selbstklebende Klebeschicht, Erstarren und gegebenenfalls Schrumpfen der Beschichtung entstanden ist.

**35.** Abdeckmaterial nach Anspruch 28, **dadurch gekennzeichnet, dass** die Deckschicht (2) mikroperforiert ist.

**36.** Abdeckmaterial nach Anspruch 28, **dadurch gekennzeichnet, dass** die mit der Klebeschicht (1) fest verklebte Deckschicht (2) eine Kunststoff-Folie, beispielsweise eine Polyvinylfluorid-Folie ist.

**37.** Abdeckmaterial nach Anspruch 28, **dadurch gekennzeichnet, dass** die mit der Klebeschicht (1) fest verklebte Deckschicht (2) eine Metallfolie ist.

**38.** Abdeckmaterial nach Anspruch 28, **dadurch gekennzeichnet, dass** die maschenartige Stabilisationsschicht (22.1, 22.2) aus plastisch verformbarem Metallgitter besteht.

**39.** Abdeckmaterial nach Anspruch 28, **dadurch gekennzeichnet, dass** die maschenartige Stabilisationsschicht (22.1, 22.2) aus Kunststoff besteht.

**40.** Abdeckmaterial nach Anspruch 28, **dadurch gekennzeichnet, dass** die Stabilisationsschicht polygonale, insbesondere quadratische Maschen (42) aufweist.

**41.** Abdeckmaterial nach Anspruch 28, **dadurch gekennzeichnet, dass** die Stabilisationsschicht runde Maschen (42) aufweist.

**42.** Abdeckmaterial nach Anspruch 40 oder 41, **dadurch gekennzeichnet, dass** der mittlere Durchmesser der Maschen (42) 5 mm bis 20 mm, vorzugsweise 8 mm bis 10 mm groß ist.
